Europäisches Patentamt

European Patent Office

Office européen des brevets

(11) Publication number: **0 035 079**
**B1**

## (12) EUROPEAN PATENT SPECIFICATION

(45) Date of publication of patent specification: **18.04.84**

(51) Int. Cl.³: **F 01 P 7/16**

(21) Application number: **80301146.9**

(22) Date of filing: **10.04.80**

(54) Thermostat assembly for engine cooling systems.

(30) Priority: **05.03.80 GB 8007419**

(43) Date of publication of application:
**09.09.81 Bulletin 81/36**

(45) Publication of the grant of the patent:
**18.04.84 Bulletin 84/16**

(84) Designated Contracting States:
**DE FR GB**

(56) References cited:
**FR - A - 2 136 535**
**GB - A - 607 867**
**GB - A - 866 947**
**US - A - 2 516 390**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Hunt, Albert Alfred**
**58 Kettlebury Way**
**Marden Ash Ongar Essex (GB)**

(74) Representative: **Drakeford, Robert William et al,**
**Ford Motor Company Limited 15/448, Research &**
**Engineering Centre Laindon**
**Basildon Essex SS15 6EE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Thermostat assembly for engine cooling systems

This invention relates to thermostat assemblies for engine cooling systems.

Conventional engine cooling systems include a thermostatic valve mounted in a coolant flow passage in a housing which is mounted on the engine. The thermostatic valve operates in response to the temperature of the coolant to control the flow of coolant through the housing so that, at low temperatures, coolant is prevented from circulating through a radiator in the cooling system and therefore allows the engine to warm up quickly.

When the cooling system is filled, the thermostatic valve is normally closed. In order to allow air displaced by the coolant to escape from the system during filling, an air bleed valve is usually provided to allow the displaced air to flow past the closed valve. This bleed valve is normally positioned either in the thermostatic valve unit (as, for example, shown in British Patent Specification No. 1029545) or in a separate bypass passage communicating with the flow passage on opposite sides of the valve (as shown in British Patent Specification No. 1401396 or FR—A—2136535).

Usually the bleed valve comprises a float which is movable into and out of engagement with a valve seat and moves into sealing engagement with the valve seat, closing the valve, when the water level in the cooling system reaches the level of the bleed valve. When the water has reached this level therefore, there is a risk that air locks can be formed in the part of the system above the bleed valve. Although the air would be displaced when the thermostatic valve has opened, the cooling system would not be filled to the correct capacity.

According to the present invention there is provided a thermostat assembly for an engine cooling system comprising a housing having a coolant flow passage therethrough extending from a first port to a second port and adapted to be secured to an engine so that the first port is higher than the second port, a thermostatic valve positioned in the flow passage and operable in response to the temperature of the coolant to control the flow of fluid through the flow passage, a bypass passage communicating with the flow passage on opposite sides of the thermostatic valve, and a bleed valve in the bypass passage for allowing air to bypass the thermostatic valve when closed as the engine cooling system is filled with coolant characterised in that the housing incorporates a filling passage having an inlet at a higher level than the first and second parts and through which coolant may be introduced into the flow passage and in that the bleed valve is positioned in the housing at a higher level than the thermostatic valve.

By incorporating the filling passage, the inlet to which must be the highest point in the cooling system, in the housing and arranging the air bleed valve higher than the thermostatic valve, the amount of air trapped in the cooling system when the system is filled with cold coolant is minimised.

The filling passage preferably discharges into the flow passage adjacent the first port and the bypass passage preferably also has an outlet into the flow passage adjacent the first port. With this arrangement the bleed valve can be positioned level with the first port, thus ensuring that the system can be filled substantially completely with coolant when the thermostatic valve is closed.

The optimum position for the housing is above the engine so that air is displaced from all the cooling passages in the engine head during filling. In some engines however this is not possible and the housing must be positioned on one side of the engine. For such cases, a vent passage is preferably provided in the housing of the present invention. This vent passage has an inlet arranged to communicate with the engine above the second port and an outlet on at least the same level as the inlet and communicating with the bypass passage below the bleed valve but above the thermostatic valve. The housing can then be positioned alongside the engine with the vent passage arranged to vent air from the cooling passages in the top of the engine above the second port of the housing during filling.

The disposition of the bleed valve in a separate bypass passage also has the advantage that the thermostatic valve, which will usually be in the form of a unit, can be arranged with its valve seat in any orientation, for example, vertical or horizontal.

A preferred embodiment of the invention will now be described, by way of example only, with reference to the accompanying drawings, in which:—

Figure 1 is an elevation of one side of the thermostat assembly in accordance with the invention showing the assembly in its normal position;

Figure 2 is an elevation of the other side of the assembly of Figure 1;

Figure 3 is a plan of the assembly of Figures 1 and 2;

Figure 4 is a vertical cross section showing the assembly mounted on an engine,

Figure 5 is a vertical cross-section taken along line V—V of Figure 4; and

Figure 6 is a vertical cross-section taken along line VI—VI of Figure 3.

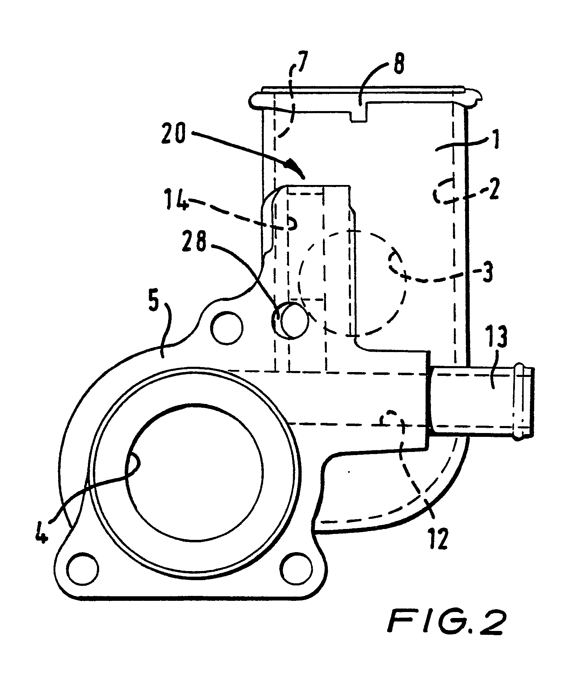

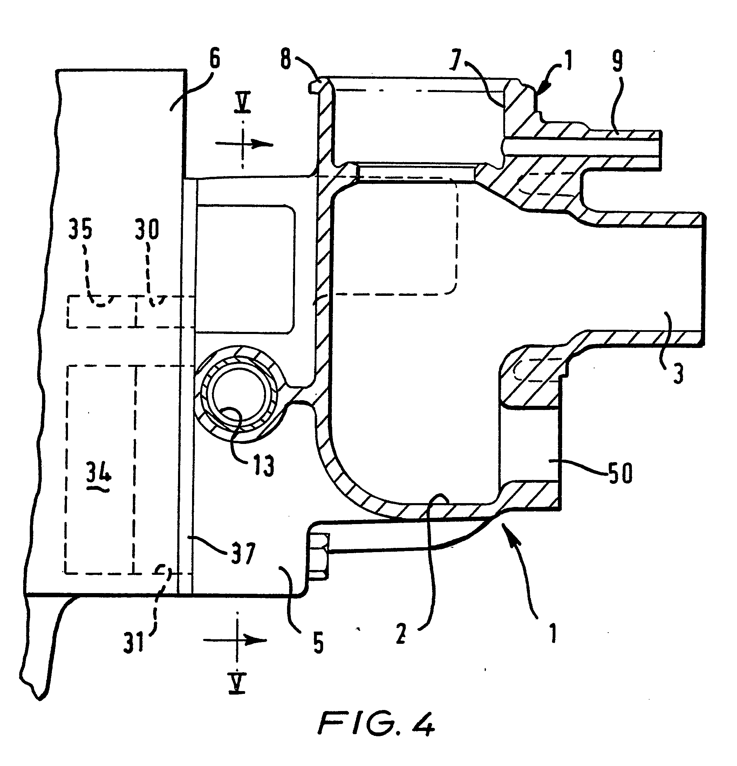

Referring to the drawings, the thermostat assembly comprises a housing 1, in the form of a unitary casting. The housing 1 has a coolant flow passage 2 therethrough, the passage 2 extending from a first port 3, adapted to be connected to a flexible radiator hose, to a second port 4 (Fig. 2) which is surrounded by a mounting flange 5 by means of which the housing 1 may be bolted to an engine 6, as shown in Figure 4. The first port 3 is at a higher vertical level than the second port 4 when the housing occupies its normal working position, which is as shown in the drawings.

A filling passage 7 through which coolant fluid may be introduced into the housing is formed integrally with the housing 1. The filling passage 7 has a flanged inlet 8 adapted to receive a pressure cap (not shown) of conventional construction. The outlet from the filling passage 7 discharges directly into the flow passage 2 adjacent the first port 3.

The inlet 8 is positioned above the first and second ports and, when installed in the vehicle, is the highest point of the cooling system. An overflow pipe 9 projects outwardly from the filling passage 7 immediately below the inlet 8.

A threaded bore 50 is formed in the housing 1 to receive a temperature sensor (not shown).

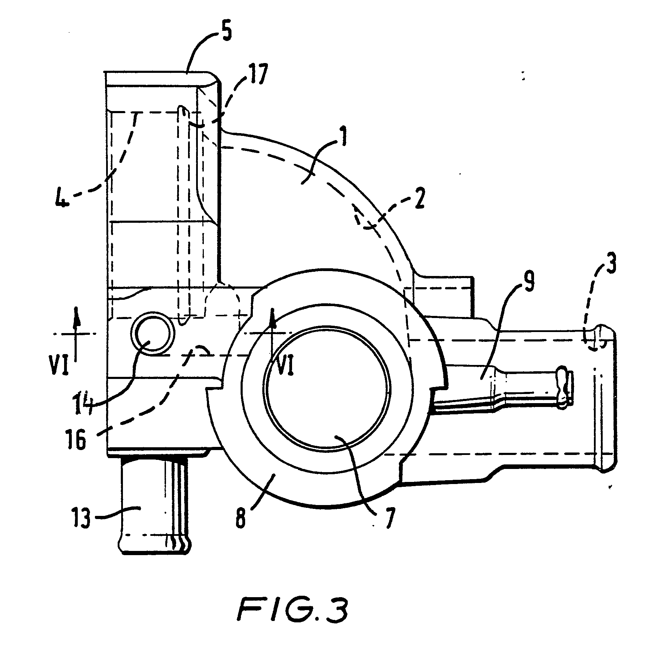

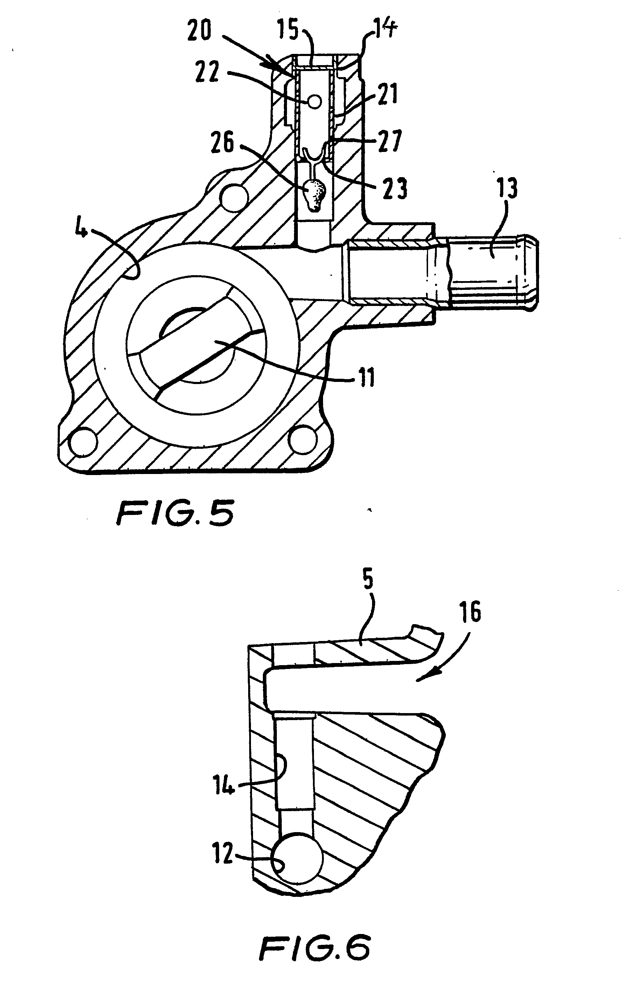

As seen in Figure 3, a seat 17 is formed in the flow passage 2 inwardly of the second port 4 and, as indicated schematically in Figure 5, a thermostatic valve unit 11 of conventional construction is received in the seat. The valve unit 11 operates in response to the temperature of the fluid in the passage 2 to control the flow of fluid therethrough. At room temperature, the valve unit 11 is closed.

The mounting flange 5 includes a horizontal transverse bore 12 which extends from one side of the flange 5 and intersects the top of the coolant passage 2 immediately adjacent the valve unit 11 on the side nearer the second port 4. The mouth of the transverse bore 12 includes a connecting pipe 13 for coupling the housing 1 to a vehicle heater matrix.

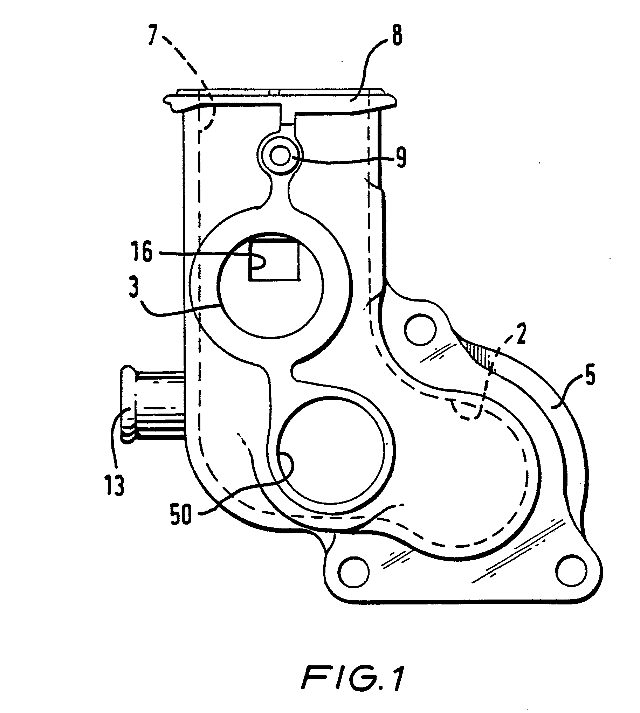

A vertical bore 14 extends downwardly through the flange 5 to intersect the transverse bore 12. The upper end of the bore 14 is closed by a cap 15 (Fig. 5). As best seen in Figures 1 and 6 a horizontal recess 16 cast into the internal wall of the flow passage 2 effects communication between the vertical bore 14 and the flow passage 2 at a point adjacent the firsty port 3 and on the opposite side of the valve unit 11 from the bore 12. The transverse bore 12, the vertical bore 14 and the recess 16 thus form a bypass passage around the thermostatic valve unit 11.

A bleed valve 20 (Fig. 5) of the "jiggle pin" type positioned in the vertical bore 14 comprises a tube 21 having perforations 22 around its upper end which register with the inner end of the recess 16. An inwardly-tuned flange is formed on the lower end of the tube 21 and acts as a seat 23 for a valve member. The valve member comprises a float 26 of plastics material e.g. nylon having a density less than water moulded on to a supporting pin 27 by means of which the float is suspended from the lower end of the tube 21 for vertical movement into and out of sealing engagement with the seat 23. The tube 21 is positioned in the upper end of the vertical bore 14 at a higher vertical level than the valve unit 11 and at approximately at the same level as the centre of the first port 3.

A vent passage 28 extends obliquely from the face of the flange 5 to communicate with the vertical bore 14. The inlet to the vent passage 28 is positioned at a higher level than the second port 4. The outlet from the vent passage 28 is on the same level as the inlet and communicates with the vertical bore 14 immediately below the bleed valve and above the valve unit 11.

In use, the housing 1 is bolted to an engine 6 as shown in Figure 4 and is sealed thereto by means of a gasket 37. The gasket 37 includes two apertures which register with the second port 4 and the inlet of the vent passage 28 and connect them to respective outlet ports 30, 31 in the engine. The lower outlet port 31 which registers with the second port 4 is the outlet for the main flow passages of the engine indicated schematically at 34. The upper outlet 30 communicates with a vent passage 35 which is the highest point in the internal cooling passages in the engine.

When cold coolant is introduced into the empty cooling system through the filling passage 7, the valve unit 11 will be closed. Consequently when the passage 2 has filled up to the level of the bottom of the first port 3, it will pass out of the housing through the first port 3 and thence to the radiator (not shown) and the engine 6 and the heater matrix (not shown).

Air displaced by the water passes from the engine into the second port 4 and from the heater matrix into the transverse bore 12. Since the valve 11 is closed, the air passes up the vertical bore 14, through the bleed valve 20 and the recess 16 and out of the housing through the filling passage 7.

As the coolant level in the cooling system increases, it will fill the main flow passages 34 of the engine 6 and reach the level of the second port 4 and then pass through the bypass passage until it reaches the level of the valve 20. At that point the float 26 will be raised into sealing engagement with the seat 23 to prevent further escape of air from the system.

By this time however, all the air will have been displaced from engine flow passages either through the main flow passages 34 or through the vent passage 35. Consequently the engine cooling passages will be completely full of water. Moreover, since the bleed valve 20 is at a level higher than the valve unit 11, the valve unit 11 will be completely immersed. Additionally, since the outlet from the bypass channel through recess 16 lies on level with the first port 3, the only volume in the system not containing water is that in the immediate vicinity of the filling passage 7. The system can therefore be topped up with coolant without any fear that air is locked in the system.

## Claims

1. A thermostat assembly for an engine cooling system comprising a housing (1) having a coolant flow passage (2) therethrough extending from a first port (3) to a second port (4) and adapted to be secured to an engine so that the first port (3) is higher than the second port (4), a thermostatic valve (11) positioned in the flow passage (2) and operable in response to the temperature of the coolant to control the flow of fluid through the flow passage (2), a bypass passage (12, 14, 16) communicating with the flow passage (2) on opposite sides of the thermostatic valve (11), and a bleed valve (20) in the bypass passage for allowing air to bypass the thermostatic valve when closed as the engine cooling system is filled with coolant characterised in that the housing (1) incorporates a filling passage (7) having an inlet (8) at a higher level than the first and second ports (3, 4) and through which coolant may be introduced into the flow passage and in that the bleed valve (20) is positioned in the housing (1) at a higher level than the thermostatic valve (11).

2. An assembly according to Claim 1 wherein the housing defines a vent passage (28) having an inlet arranged for communication with the engine above the second port (4) and an outlet on at least the same level as the inlet and communicating with the bypass passage (12, 14, 16) below the bleed valve (20) but above the thermostatic valve (11).

3. An assembly according to Claim 1 or Claim 2 wherein the filling passage (7) has an outlet into the flow passage (2) adjacent the first port (3).

4. An assembly according to any one of Claims 1 to 3 wherein the bypass passage (12, 14, 16) has an outlet into the flow passage (2) adjacent the first port (3).

5. An assembly according to any one of Claims 1 to 4 wherein the thermostatic valve (11) comprises a generally planar valve seat (17) which is arranged in a generally vertical plane when the housing (1) is in its normal position.

6. An assembly according to any one of Claims 1 to 5 wherein the bleed valve (20) comprises a valve seat (23) and a valve member (26) into and out of sealing engagement with the valve seat, and arranged to seal the valve seat (23) when the cooling system is full of coolant.

## Patentansprüche

1. Thermostataufbau für ein Motorkühlsystem, bestehend aus einem Gehäuse (1), das von einem von einer ersten Oeffnung (3) zu einer zweiten Oeffnung (4) verlaufenden Kühlmitteldurchflusskanal (2) durchsetzt wird und so an einem Motor befestigt werden kann, dass die erste Oeffnung (3) höher als die zweite Oeffnung (4) liegt, einem Thermostatventil (11), das in dem Durchflusskanal (2) angeordnet und als Funktion der Kühlmitteltemperatur zur Steuerung der Durchflussmenge durch den Durchflusskanal (2) betätigbar ist, einem Ueberströmkanal (12, 14, 16), der mit dem Durchflusskanal (2) an gegenüberliegenden Seiten des Thermostatventils (11) in Verbindung steht, und einem Entlüftungsventil (20) im Ueberströmkanal, um Luft an dem Thermostatventil vorbeiströmen zu lassen, wenn dieses beim Füllen des Motorkühlsystems mit Kühlmittel geschlossen ist, dadurch gekennzeichnet, dass das Gehäuse (1) einen Füllkanal (7) mit einem Einlass (8) auf einer grösseren Höhe als die ersten und zweiten Oeffnungen (3, 4) enthält, durch welchen Kühlmittel in den Durchflusskanal eingebracht werden kann, und dass das Entlüftungsventil (20) in dem Gehäuse (1) auf grösserer Höhe als das Thermostatventil (11) angeordnet ist.

2. Aufbau nach Anspruch 1, worin das Gehäuse einen Entlüftungskanal (28) begrenzt, der einen zur Verbindung mit dem Motor über der zweiten Oeffnung (4) angeordneten Einlass und einen Auslass auf mindestens derselben Höhe wie der Einlass aufweist und mit dem Ueberströmkanal (12, 14, 16) unter dem Entlüftungsventil (20) aber über dem Thermostatventil (11) in Verbindung steht.

3. Aufbau nach Anspruch 1 oder 2, worin der Füllkanal (7) einen Auslass in den Durchflusskanal (2) neben der ersten Oeffnung (3) aufweist.

4. Aufbau nach einem der Ansprüche 1 bis 3, worin der Ueberströmkanal (12, 14, 16) einen Auslass in den Durchflusskanal (2) neben der ersten Oeffnung (3) aufweist.

5. Aufbau nach einem der Ansprüche 1 bis 4, worin das Thermostatventil (11) einen allgemein planaren Ventilsitz (17) besitzt, der in einer allgemein senkrechten Ebene angeordnet ist, wenn sich das Gehäuse (1) in seiner normalen Lage befindet.

6. Aufbau nach einem der Ansprüche 1 bis 5, worin das Entlüftungsventil (20) einen Ventilsitz (23) und ein Ventilglied (26) aufweist, das in und ausser dichtenden Eingriff mit dem Ventilsitz bewegbar ist und so angeordnet ist, dass es den Ventilsitz (23) abdichtet, wenn das Kühlsystem mit Kühlmittel gefüllt ist.

## Revendications

1. Dispositif à thermostat pour le circuit de refroidissement d'un moteur comprenant un boîtier (1) traversé de part en part par un passage de circulation d'agent de refroidissement (2) allant d'un premier orifice (3) à un second orifice (4) et propre à être fixé à un moteur de telle sorte que le premier orifice (3) soit plus haut que le second orifice (4), une valve thermostatique (11) placée dans le passage (2) et pouvant fonctionner en réaction à la température de l'agent de refroidissement pour régir l'écoulement du liquide à travers le passage de circulation (2), un passage de dérivation (12, 14, 16) communiquant avec le passage (2), de part et d'autre de la valve thermostatique (11), et une valve de fuite (20) dans le passage de dérivation pour permettre à l'air de dériver la valve thermostatique lorsqu'elle est fermée au moment du remplissage du circuit de refroidissement du moteur au moyen d'agent de refroidissement, caractérisé en ce que le boîtier (1) comprend un passage de remplissage (7) comportant une entrée (8) située à un niveau plus élevé que celui du premier et du second orifice (3, 4) et par laquelle de l'agent de refroidissement peut être introduit dans le passage de circulation et la valve de fuite (20) est placée dans le boîtier (1) à un niveau supérieur à celui de la valve thermostatique (11).

2. Dispositif suivant la revendication 1, caractérisé en ce que le boîtier présente un passage (28) formant évent qui comporte une entrée propre à communiquer avec le moteur au-dessus du second orifice (4) et une sortie située au moins au même niveau que l'entrée et communiquant avec le passage de dérivation (12, 14, 16) en dessous de la valve de fuite (20), mais au-dessus de la valve thermostatique (11).

3. Dispositif suivant la revendication (1) ou 2, caractérisé en ce que le passage de remplissage (7) comporte une sortie qui s'ouvre dans le passage de circulation (2) près du premier orifice (3).

4. Dispositif suivant l'une quelconque des revendications 1 à 3, caractérisé en ce que le passage de dérivation (12, 14, 16) comporte une sortie qui s'ouvre dans le passage de circulation (12) près du premier orifice (3).

5. Dispositif suivant l'une quelconque des revendications 1 à 4, caractérisé en ce que la valve thermostatique (11) comprend un siège de valve généralement plan (17) qui est disposé dans un plan dans l'ensemble vertical lorsque le boîtier (1) se trouve dans sa position normale.

6. Dispositif suivant l'une quelconque des revendications 1 à 5, caractérisé en ce que la valve de fuite (20) comprend un siège de valve (23) et un obturateur (26) pouvant être amené en contact étanche avec le siège et pouvant être écarté de celui-ci, cet obturateur obturant le siège de valve (23) de manière étanche lorsque le circuit de refroidissement est rempli d'agent de refroidissement.

FIG.1

FIG.2

FIG.3

FIG. 4

FIG.5

FIG.6